# EUROPÄISCHE PATENTSCHRIFT

(11) **EP 4 152 574 B1**
(45) Veröffentlichungstag und Bekanntmachung des Hinweises auf die Patenterteilung: **11.06.2025**
(21) Anmeldenummer: 22188232.7
(22) Anmeldetag: 02.08.2022
(51) Int. Cl.: H02K 5/20, H02K 5/04, H02K 7/116, H02K 5/173

(54) **VERFAHREN ZUR HERSTELLUNG EINES GEHÄUSES EINES E-ACHSEN-MODULS**
METHOD FOR MANUFACTURING A HOUSING FOR AN E-AXIS MODULE
MÉTHODE DE PRODUCTION D'UN LOGEMENT D'UN MODULE E-ESSIEU

(30) Priorität: 17.09.2021 DE 102021210330
(43) Veröffentlichungstag der Anmeldung: 22.03.2023
(73) Patentinhaber: Robert Bosch GmbH, 70442 Stuttgart (DE)
(72) Erfinder: Schleining, Igor, 70437 Stuttgart (DE); Techman, Witold, 74321 Bietigheim-Bissingen (DE)

(56) Entgegenhaltungen:
- DE-A1- 3 941 474
- US-A- 5 744 880
- US-B2- 7 154 201

## Beschreibung

### Technisches Gebiet

Die Erfindung bezieht sich auf die Herstellung eines Gehäuse eines E-Achsen-Moduls eines elektrisch angetriebenen Fahrzeugs, wobei das E-Achsen-Modul eine elektrische Maschine und eine Leistungselektronik umfasst, die über einen Kühlkreislauf gekühlt sind.

### Stand der Technik

DE 10 2008 001 621 A1 bezieht sich auf eine elektrische Maschine mit einer integrierten Gehäusekühlung. Die elektrische Maschine umfasst ein mindestens eine Gehäusewand aufweisendes Gehäuse. In diesem Gehäuse ist mindestens eine elektrische Baugruppe aufgenommen. Ferner ist eine Kühleinrichtung vorgesehen, die mindestens eine Kühlmittelsprüheinrichtung zum Besprühen der elektrischen Baugruppe mit Kühlmittel aufweist. Es ist ferner vorgesehen, dass die Kühleinrichtung zur Gehäusekühlung mindestens einen in der Gehäusewand verlaufenden Gehäusekühlmittelkanal für das Kühlmittel aufweist.

DE 20 2011 076 525 A1 bezieht sich auf einen elektrischen Fahrantrieb für ein Fahrzeug. Es wird ein elektrischer Fahrantrieb für ein Fahrzeug mit zumindest einer elektrischen Maschine und einem mit der elektrischen Maschine gekoppelten Getriebe offenbart, die in einem gemeinsamen Gehäuse angeordnet sind. Ein gemeinsamer Kühl- und/oder Schmierkreislauf ist für die elektrische Maschine und das Getriebe vorgesehen. Der Kühl und/oder Schmiermittelkreislauf umfasst zumindest einen Kühlkörper an der elektrischen Maschine und zumindest einen Verteilungskörper zum Verteilen des Kühl- und/oder Schmiermediums in dem Gehäuse.

Weitere elektrische Maschinen sind aus der US 5 744 880 A, der US 7 154 201 B2 und der DE 39 41 474 A1 bekannt.

Ein E-Achsen-Modul umfasst im Allgemeinen einen Kühlmittelkreislauf, womit die Komponenten des E-Achsen-Moduls, die elektrische Maschine und gegebenenfalls ein Getriebe gekühlt werden können. Der Rückfluss des Kühlmittels erfolgt mittels einer extern verlaufenden Leitung in Form eines Schlauchs oder eines Kunststoffrohrs oder ähnlicher Komponenten. Nachteilig bei den extern montierten Komponenten ist der Umstand, dass Zusatzbauteile benötigt werden, beispielsweise Leitungen, Abdichtungen und Fixierkomponenten, die Kosten bei Beschaffung, Montage, Dokumentation und im Servicefall erzeugen. Des Weiteren stellt sich bei derartigen Lösungen ein nicht unerheblicher Zusatzaufwand bei Dichtheitsprüfungen des Enderzeugnisses ein, da mehrere Dichtschnittstellen zu prüfen sind. Aufgrund der extern verlaufenden Kunststoffleitung beziehungsweise des Schlauchs ergibt sich ein höherer Bauraumbedarf. Weiterhin beeinflussen extern am E-Achsen-Modul verlaufende Kühlmittelleitungen, ob Schläuche oder Kunststoffrohre, die Optik dieser Baugruppe nachteilig.

### Darstellung der Erfindung

Die Erfindung ist durch Anspruch 1 definiert. Bevorzugte Ausführungsbeispiele ergeben sich aus den abhängigen Ansprüchen.

Erfindungsgemäß wird ein Gehäuse eines E-Achsen-Moduls mit zumindest einer elektrischen Maschine und einem Getriebe hergestellt, wobei die elektrische Maschine mittels eines Kühlkreislaufs gekühlt ist. Im Gehäuse erstreckt sich zumindest ein Kühlkanal in zumindest einer Gehäusewand von einer ersten Übergabestelle zu mindestens einer weiteren Übergabestelle, der entlang thermisch kritischer Stellen durch das Gehäuse verläuft.

Durch diese Gestaltung des Gehäuses kann in vorteilhafter Weise erreicht werden, dass gehäuseexterne Anbauten für Kühlmittelleitungen beziehungsweise Kühlmittelleitungsabschnitte in das Innere, insbesondere in einbautenfreie, nicht benötigte Teile des Gehäuses des E-Achsen-Moduls verlegt werden. Dadurch entfällt zusätzlicher Montage- beziehungsweise Befestigungsaufwand, ferner wird die Anzahl der benötigten Bauteile erheblich reduziert.

Das erfindungsgemäß hergestellte Gehäuses umfasst mindestens einen ersten Kanalabschnitt und einen weiteren Kanalabschnitt, die an einer Umlenkstelle miteinander verbunden sind. Durch eine entsprechende Führung des Kühlkanals durch das Gehäuse beziehungsweise durch die Anzahl der gewählten Kühlkanalabschnitte kann in optimaler Weise für eine Kühlung thermisch kritischer Stellen Sorge getragen werden.

In vorteilhafter Weise sind beim erfindungsgemäß hergestellten Gehäuse die thermisch kritischen Stellen durch eine erste Lagerstelle und mindestens eine weitere Lagerstelle des Getriebes gegeben. Die Lagerstellen am Getriebe können aufgrund von entsprechender Leitungsführung des mindestens einen Kühlkanals entlang von dessen Erstreckung durch die mindestens eine Gehäusewand beziehungsweise im oder auf dem Gehäusemantel in den Pfad des Kühlmediums integriert werden, so dass nicht nur Abwärme der elektrischen Maschine, sondern auch die Lagertemperatur an den betreffenden Lagerstellen konstant gehalten beziehungsweise auf einem vorgegebenen Temperaturwert gehalten werden kann.

Bei einem weitergebildeten Gehäuse nimmt der zumindest eine Kühlkanal in einer Gehäusewand einen vertikalen Verlauf und im oder auf einem Gehäusemantel einen horizontalen Verlauf. Durch eine dementsprechende Gestaltung der Leitungsführung des mindestens einen Kühlkanals kann den Anforderungen von Automobilherstellern hinsichtlich der Anordnung der Übergabestelle am Gehäuse des E-Achsen-Moduls in optimaler Weise Rechnung getragen werden, so dass sich die Einbauvarianz des erfindungsgemäß vorgeschlagenen E-Achsen-Moduls verbessern lässt.

In weiterer Ausgestaltung des Gehäuses ist der zumindest eine Kühlkanal hinsichtlich seiner Leitungsführung so ausgelegt, dass dieser an der mindestens einen Gehäusewand und im Gehäusemantel Knickstellen aufweist, an denen der Kühlfluidstrom um 80° bis 120°, insbesondere 90°, umgelenkt werden kann.

Bei einem weitergebildeten Gehäuse ist an der mindestens einen Knickstelle des Kühlkanals mindestens eine Abdichtung mittels eines Dichtkörpers, insbesondere in Gestalt einer Stahlkugel, ausgeführt.

Bei einem weitergebildeten Gehäuse sind die Übergabestellen für den mindestens einen Kühlkanal in die Fläche des Gehäusemantels integriert, so dass sich keine Vorsprünge auf diesem ergeben, was zum einen dessen optisches Erscheinungsbild verbessert und andererseits eine glatte Oberfläche darstellt.

Bei einem weitergebildeten Gehäuse wird der zumindest eine Kühlkanal oder dessen Kühlkanalabschnitte insbesondere durch einbautenfreie Bereiche des Gehäuses gelegt. Dadurch kann in optimaler Weise der zur Verfügung stehende Bauraum ausgenutzt werden, ohne dass gehäuseexterne Anbauten an das Gehäuse erforderlich würden.

Die Erfindung betrifft ein Verfahren zur Herstellung des Gehäuses, wobei der mindestens eine Kühlkanal oder dessen Kühlkanalabschnitte beim Urformen des Gehäuses, insbesondere beim Druckguss oder beim Gießen des Gehäuses, erzeugt werden und durch eine spanabhebende Bearbeitung in voneinander verschiedenen Bearbeitungsrichtungen die verschiedenen Kühlkanalabschnitte hinsichtlich Durchmesser und Länge fertig bearbeitet werden. Aufgrund der nachgeordneten spanabhebenden Bearbeitung zuvor mittels eines Urformverfahrens erzeugter Kühlmittelkanäle beziehungsweise Kühlmittelabschnitte können die Kühlfluidvolumina entsprechend dimensioniert werden, ferner die Leitungslänge durch das Material, insbesondere das metallische Material des Gehäuses, in optimaler Weise an den Kühlmittelstrom angepasst werden.

### Vorteile der Erfindung

Durch die erfindungsgemäß vorgeschlagene Gestaltung des Gehäuses eines E-Achsen-Moduls können gehäuseexterne Anbauten für Kühlleitungen beziehungsweise Kühlleitungsabschnitte vermieden werden. Dadurch können zum einen die Anzahl der benötigten Bauteile und zum anderen der Montageaufwand des Gehäuses verringert werden. Des Weiteren ergibt sich durch den Verzicht auf gehäuseexterne Anbauten ein optisch gefälligeres Erscheinungsbild des E-Achsen-Moduls als fertig montierte Einheit. Aufgrund der Vorgabe der Übergabestellen, d. h. der Anschlussstellen des Kühlkanals an einen Kühlkreislauf, kann verschiedenen Anforderungen von Automobilherstellern Rechnung getragen werden, so dass bereits bei Auslegung des Gehäuses, welches im Wesentlichen in einem Urformverfahren, beispielsweise im Druckgussverfahren hergestellt wird, die Positionen der Übergabestellen angelegt werden können. Dadurch kann der spätere Einbauaufwand gering gehalten werden, des Weiteren kann die Einbauvarianz des erfindungsgemäß vorgeschlagenen E-Achsen-Moduls mit dem entsprechend gestalteten Gehäuse nicht unerheblich erweitert werden.

Schließlich kann durch das erfindungsgemäß vorgeschlagene Verfahren zur Herstellung des Gehäuses eine erhebliche Verringerung des Aufwands bezüglich der Dichtheitsprüfungen von Kühlmittelleitungen am Enderzeugnis, d. h. am fertigen E-Achsen-Modul erreicht werden. Aufgrund der Reduktion der Bauteileanzahl reduziert sich das Ausfallrisiko bei Verwendung des erfindungsgemäß vorgeschlagenen Gehäuses an einem E-Achsen-Modul nicht unerheblich.

Es ergeben sich des Weiteren Kostenvorteile bei der Beschaffung der Montage und der Dokumentation hinsichtlich von Stücklisten und dergleichen, Lieferantenzeichnungen, Lieferantenbetreuung und im Servicefall. Der Bauraumbedarf verringert sich dadurch, dass der Kühlkanal zum größten Teil durch das erfindungsgemäss hergestellte Gehäuse des E-Achsen-Moduls geführt werden kann und keine gehäuseexternen Anbauten erforderlich sind. Es ergeben sich optische Vorteile des fertig montierten E-Achsen-Moduls, da Kühlfluidkanäle von außen nur andeutungsweise in der Gussgeometrie des Gehäuses erkennbar sind.

### Kurze Beschreibung der Zeichnungen

Ausführungsformen der Erfindung werden anhand der Zeichnungen und der nachfolgenden Beschreibung näher erläutert.

Es zeigen:
- Figur 1: eine perspektivische Draufsicht auf ein Gehäuse eines E-Achsen-Moduls,
- Figur 2: eine Seitenansicht des Gehäuses des E-Achsen-Moduls von der E-Maschinenseite her,
- Figur 3: eine Seitenansicht des Gehäuses des E-Achsen-Moduls von der Getriebeseite her,
- Figur 4: einen Verlauf von Kanalabschnitten eines Kühlkanals durch das Innere des Gehäuses entlang von thermisch kritischen Stellen, insbesondere Lagerstellen im Getriebe, und
- Figur 5: eine Vorderansicht auf das Gehäuse des E-Achsen-Moduls mit vertikalem und horizontalem Verlauf des Kühlkanals samt Knickstelle und dort vorgesehenen Abdichtungen.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

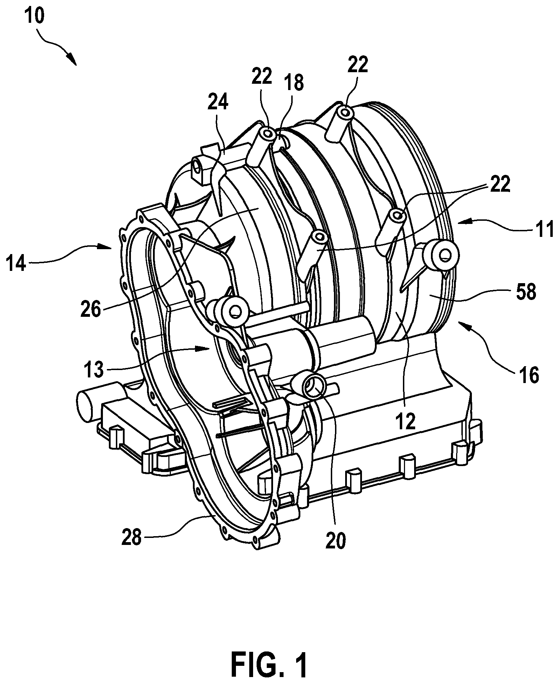

Figur 1 zeigt eine perspektivische Ansicht der Oberseite eines E-Achsen-Moduls 10 eines elektrisch angetriebenen Fahrzeugs, beispielsweise eines elektrisch angetriebenen Personenkraftwagens oder eines elektrisch angetriebenen leichten Nutzfahrzeugs.

Wie Figur 1 zeigt, umfasst das E-Achsen-Modul 10 ein Gehäuse 12, in dem eine hier nicht näher dargestellte elektrische Maschine 11 verbaut ist. Des Weiteren umfasst das E-Achsen-Modul 10 ein Getriebe 13, ebenfalls hier nicht näher dargestellt. Das Gehäuse 12 umfasst eine Getriebeseite 14 und eine dieser gegenüberliegende E-Maschinenseite 16, von der aus die elektrische Maschine 11 in das Innere des Gehäuses 12 seitlich eingeschoben wird, ebenso wie die Getriebekomponenten des Getriebes 13 von der Getriebeseite 14 her in das Gehäuse 12 eingeschoben werden.

Am Gehäusemantel 58 des Gehäuses 12 des E-Achsen-Moduls 10 sind eine erste Übergabestelle 18 eines Kühlkanals 24 sowie eine zweite Übergabestelle 20 des Kühlkanals 24 angedeutet. Am Gehäusemantel 58 befinden sich ferner Flanschdome 22, auf denen ein hier aus Gründen der Übersichtlichkeit nicht dargestelltes Gehäuse einer Leistungselektronik beziehungsweise eines Inverters aufgenommen sind. Die erste Übergabestelle 18 sowie die zweite Übergabestelle 20 stellen jeweils die Enden des Kühlkanals 24 dar, der sich insbesondere durch das Innere einer Gehäusewand 26 des Gehäuses 12 des E-Achsen-Moduls 10 zieht. Die Gehäusewand 26 trennt einzelne Bereiche des Gehäuses 12, die für das Getriebe 13 beziehungsweise die elektrische Maschine 11 vorgesehen sind. Aus der perspektivischen Darstellung gemäß Figur 1 geht hervor, dass auf der Getriebeseite 14 des Gehäuses 12 eine umlaufende Dichtfläche 28 verläuft, an der einzelne Gewindebohrungen vorgesehen sind, an welchen der hier nicht dargestellte Deckel des Getriebes 13 montiert wird, um das Getriebe 13 abzudichten.

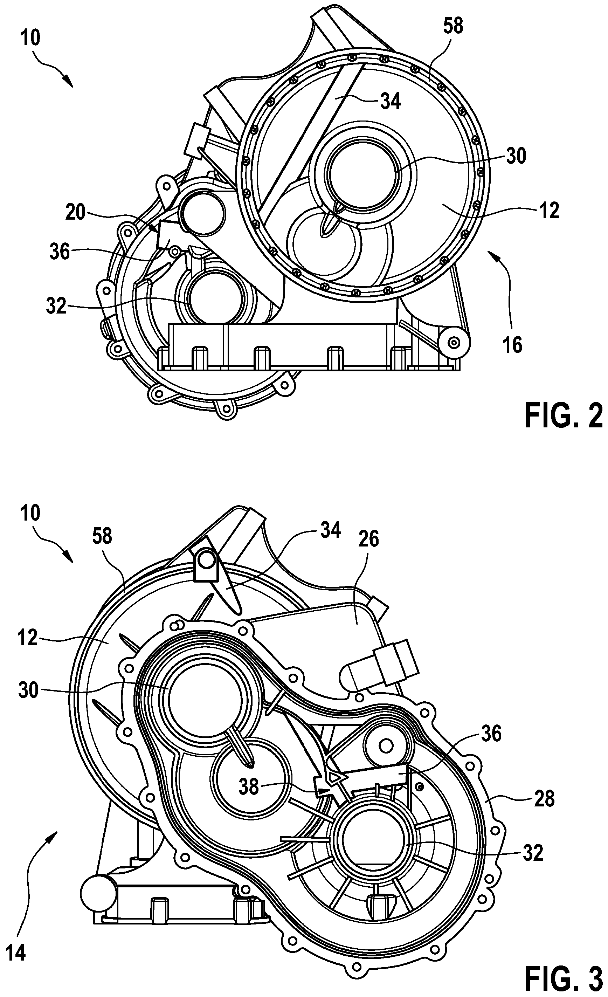

Figur 2 zeigt die Ansicht des Gehäuses 12 von der E-Maschinenseite 16 her. Der Kühlkanal 24 umfasst in der Darstellung gemäß Figur 2 einen Kanalabschnitt 34 sowie einen weiteren Kanalabschnitt 36. Der weitere Kanalabschnitt 36 mündet in der besagten zweiten Übergabestelle 20. Der Kanalabschnitt 34 erstreckt sich durch das Innere des Gehäuses 12 beziehungsweise die Gehäusewand 26. Mit Bezugszeichen 30 und 32 sind eine erste Lagerstelle sowie eine weitere Lagerstelle für Getriebekomponenten des Getriebes 13 dargestellt. Der Bauraum im Gehäuse 12 des E-Achsen-Moduls 10 wird durch den mindestens einen Kühlkanal 24 ausgenutzt, der sich durch nicht benötigte Freiräume innerhalb des Gehäuses 12 erstreckt, so dass von einer externen Leitungsführung auf eine in das Gehäuse 12 integrierte Leitungsführung des mindestens einen Kühlkanals 24 übergegangen werden kann.

Figur 3 zeigt das Gehäuse 12 von der Getriebeseite 14 her. In der Draufsicht gemäß Figur 3 sind die einzelnen Flanschbohrungen zu erkennen, welche in einer regelmäßigen Anordnung entlang der Dichtfläche 28 auf der Getriebeseite 14 des Gehäuses 12 des E-Achsen-Moduls 10 ausgebildet sind. Figur 3 zeigt des Weiteren, dass sich ausgehend vom Gehäusemantel 58 von der ersten Übergabestelle 18 des Kühlkanals 24 dessen Kanalabschnitt 34 zu einer Umlenkstelle 38 erstreckt. An der Umlenkstelle 38 ist der Kanalabschnitt 34 des mindestens einen Kühlkanals 24 mit einem weiteren Kanalabschnitt 36 verbunden. Der weitere Kanalabschnitt 36 erstreckt sich bis zu der in Figur 2 dargestellten zweiten Übergabestelle 20. Aus der Darstellung gemäß Figur 3 geht hervor, dass sich insbesondere der Kanalabschnitt 34 durch das Innere der Gehäusewand 26 erstreckt und somit in das Innere des Gehäuses 12 des E-Achsen-Moduls 10 verlegt ist. Hervorzuheben ist, dass sich gemäß der Darstellung in Figur 3 der Kanalabschnitt 34 des mindestens einen Kühlkanals 24 entlang der ersten Lagerstelle 30 erstreckt und somit das dort vorgesehene Wälzlager kühlt; Gleiches gilt für den weiteren Kanalabschnitt 36, der sich in unmittelbarer Nachbarschaft zur weiteren Lagerstelle 32 des Getriebes 13 befindet. Damit ist sichergestellt, dass sich durch den dargestellten Verlauf der Kanalabschnitte 34, 36 des mindestens einen Kühlkanals 24 entlang von thermisch kritischen Stellen eine Kühlwirkung erreichen lässt, d. h. dort angeordnete getriebeseitige Wälzlager an den Lagerstellen 30 und 32 wirksam gekühlt beziehungsweise auf Temperatur gehalten werden können, indem die Abwärme abgeführt wird.

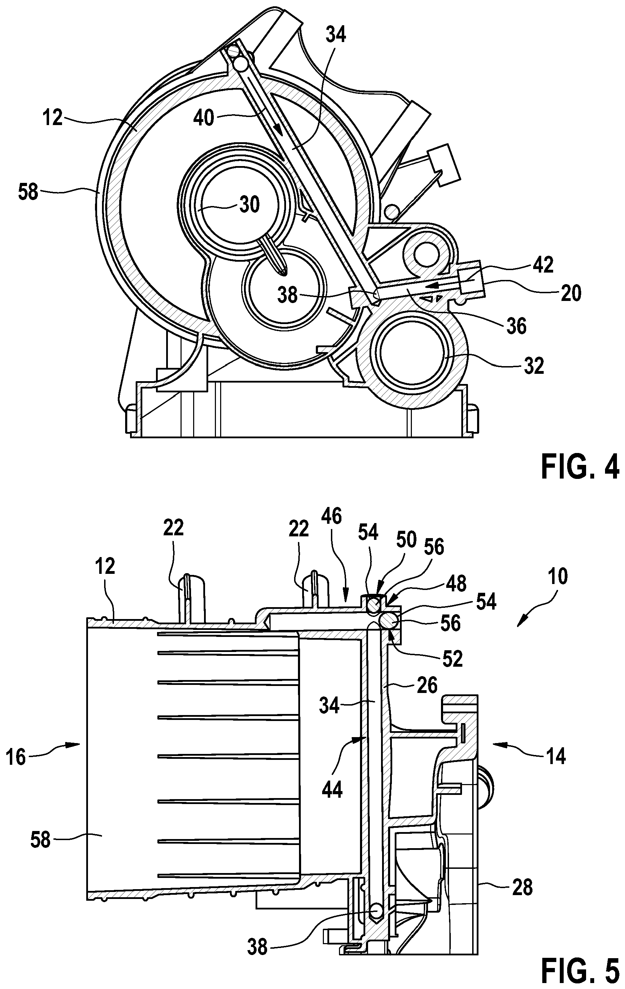

Figur 4 ist zu entnehmen, dass sich der Kanalabschnitt 34, im Wesentlichen in vertikale Richtung geneigt, durch den Gehäusemantel 58 des Gehäuses 12 erstreckt und an der Umlenkstelle 38 in den besagten weiteren Kanalabschnitt 36 übergeht. Die in Figur 4 angedeuteten Kanalabschnitte 34 und 36 können beim Urformen des Gehäuses 12 unter Ausbildung der Gehäusewand 26 beziehungsweise des Gehäusemantels 58 mittels Druckgussverfahrens oder eines anderen Gießverfahrens durch Vorsehen entsprechender Kerne vorgefertigt werden. Eine abschließende spanabhebende Bearbeitung der Kanalabschnitte 34, 36 erfolgt, wie in Figur 4 angedeutet, in eine erste Bearbeitungsrichtung 40 beziehungsweise in eine zweite Bearbeitungsrichtung 42. Dazu kann eine spanabhebende Bearbeitung der Kanalabschnitte 34, 36 derart erfolgen, dass über geeignete Bohrer der Durchmesser der Kanalabschnitte 34, 36 auf eine definierte Weite aufgebohrt wird. Ferner lassen sich durch geeignete Werkzeuge durch spanabhebende Bearbeitung in die erste Bearbeitungsrichtung 40 sowie in die zweite Bearbeitungsrichtung 42 entsprechende Längen der Kanalabschnitte 34, 36 des mindestens einen Kühlkanals 24 definiert fertigen, so dass der mindestens eine Kühlkanal 24 an den entsprechenden, diesen beaufschlagenden Kühlfluidstrom angepasst werden kann. Die an den Enden der Kanalabschnitte 34, 36 jeweils angeordneten Übergabestellen 18 und 20 können derart ausgeführt werden, dass diese mit der Oberfläche des Gehäusemantels 58 fluchten, d. h. nicht nennenswert über diese hinausstehen oder in Form von Stutzen so angeordnet werden, dass sich die Anschlüsse an der ersten Übergabestelle 18 beziehungsweise der zweiten Übergabestelle 20 gerade oberhalb des Gehäusemantels 58 des Gehäuses 12 befinden.

Aus der Darstellung gemäß Figur 4 geht des Weiteren hervor, dass der Kanalabschnitt 34 sich in unmittelbarer Nähe zur ersten Lagerstelle 30 befindet, während der weitere Kanalabschnitt 36 entlang der weiteren Lagerstelle 36 verläuft. Durch die Konfiguration beziehungsweise die Leitungsführung der Kanalabschnitte 34, 36 des mindestens einen Kühlkanals 24 durch das Innere des Gehäuses 12 können somit auch die an den Lagerstellen 30 beziehungsweise 32 angeordneten Wälzlager der hier nicht näher dargestellten Getriebekomponenten wirksam temperiert, d. h. gekühlt werden.

Figur 5 zeigt in Vorderansicht das Gehäuse 12 des E-Achsen-Moduls 10, an dem seitlich ein Gehäuseteil zur Aufnahme des Getriebes 13 vorgesehen ist. Wie im Zusammenhang mit Figur 1 bereits ausgeführt, weist das Gehäuse 12 die Getriebeseite 14 sowie die E-Maschinenseite 16 auf. Aus der Darstellung gemäß Figur 5 geht hervor, dass durch die Gehäusewand 26 zwischen dem Teil des Gehäuses 12, der die elektrische Maschine 11 aufnimmt, die von der E-Maschinenseite 16 her montiert wird, und der Getriebeseite 14 des Gehäuses 12, in welches von der Getriebeseite 14 das Getriebe 13 eingebaut wird, die Gehäusewand 26 verläuft. In dieser erstreckt sich, ausgehend von der Umlenkstelle 38, wie sie in den Figuren 3 und 4 dargestellt ist, der Kanalabschnitt 34. Dieser weist, gemäß der Darstellung in Figur 5, einen im Wesentlichen vertikalen Verlauf 44 auf. An einer Knickstelle 48 oberhalb des Gehäusemantels 58 des Gehäuses 12 geht der vertikale Verlauf 44 des Kanalabschnitts 34 in einen horizontalen Verlauf 46 des Kühlkanals 24 über. An der Knickstelle 48, die in den Gehäusemantel 58 integriert sein kann oder auch auf diesem aufliegt, befinden sich eine erste Abdichtung 50 sowie eine zweite Abdichtung 52. Durch die erste Abdichtung 50 und die zweite Abdichtung 52 kann in fertigungstechnisch einfacher Weise die Knickstelle 48 zwischen dem vertikalen Verlauf 44 und dem horizontalen Verlauf 46 des Kühlkanals 24 abgedichtet werden. Dazu werden Dichtkörper 54 eingesetzt, die bevorzugt als Stahlkugeln 56 ausgeführt sind. Über die Stahlkugeln 56 werden die erste Abdichtung 50 sowie die zweite Abdichtung 52 wirksam abgedichtet, so dass das Kühlmedium nicht aus dem mindestens einen Kühlkanal 24, insbesondere nicht im Bereich der Knickstelle 48 austritt. Der Vollständigkeit halber sei erwähnt, dass sich am Gehäusemantel 58 des Gehäuses 12 die Flanschdome 22 befinden, an denen die hier nicht näher dargestellte Leistungselektronik an dem Gehäuse 12 aufgenommen ist.

Durch das anhand der Figuren 1 bis 5 dargestellte Gehäuse 12 des E-Achsen-Moduls 10 kann ein Verlauf des mindestens einen Kühlkanals 24 durch das Innere des Gehäuses 12 beziehungsweise durch den Gehäusemantel 58 oder durch die Gehäusewand 26 in Richtung der vom Automobilhersteller geforderten Übergabestellen 18 und 20 realisiert werden. Dadurch können nicht genutzte Bauräume im Inneren des Gehäuses 12 ausgenutzt werden, so dass sich dadurch Bauraumvorteile ergeben. Zudem können thermisch kritische Stellen in Gestalt der Lagerstellen 30, 32 durch gezielte Führung der Kanalabschnitte 34, 36 des mindestens einen Kühlkanals 24 temperiert werden.

Wie bereits erwähnt, wird der Solldurchmesser der Kanalabschnitte 34, 36 durch sich dem Urformverfahren anschliessende spanabhebende Bearbeitung erzeugt. Die Öffnungen für die Kanalabschnitte 34, 36 können bereits im Gussrohteildesign vorgehalten werden. Die mechanische Bearbeitung in die erste Bearbeitungsrichtung 40 beziehungsweise in die von dieser verschiedene zweite Bearbeitungsrichtung 42 erfolgt durch Werkzeuge, wie beispielsweise Bohrer, um die entsprechenden Leitungslängen der Kanalabschnitte 34, 36 zu erzeugen. Richtungsänderungen der Kanalabschnitte 34, 36 können ebenfalls gefertigt werden. Die sich ergebenden Umlenkstellen 38 beziehungsweise die Knickstelle 48 werden durch Einpressung der Dichtkörper 54 an der ersten Abdichtung 50 beziehungsweise der zweiten Abdichtung 52 abgedichtet.

## Patentansprüche

1. Verfahren zur Herstellung eines Gehäuses (12) eines E-Achsen-Moduls (10) mit zumindest einer elektrischen Maschine (11) und einem Getriebe (13), wobei die elektrische Maschine (11) mittels eines Kühlkreislaufs gekühlt ist, wobei sich im Gehäuse (12) zumindest ein Kühlkanal (24) in zumindest einer Gehäusewand (26) von einer ersten Übergabestelle (18) zu mindestens einer weiteren Übergabestelle (20) erstreckt, der entlang thermisch kritischer Lagerstellen (30, 32) verläuft, und wobei der mindestens eine Kühlkanal (24) mindestens einen Kanalabschnitt (34) und einen weiteren Kanalabschnitt (36) umfasst, die an einer Umlenkstelle (38) fluidisch miteinander verbunden sind,
**dadurch gekennzeichnet, dass**
das Verfahren vorsieht, dass die Kanalabschnitte (34, 36) beim Urformen des Gehäuses (12) erzeugt werden und durch spanabhebende Bearbeitung in voneinander verschiedenen Bearbeitungsrichtungen (40, 42) hinsichtlich Durchmesser und Länge fertig bearbeitet werden.

2. Verfahren gemäß Anspruch 1, **dadurch gekennzeichnet, dass** die thermisch kritischen Stellen eine erste Lagerstelle (30) und mindestens eine weitere Lagerstelle (32) des Getriebes (13) sind.

3. Verfahren gemäß den Ansprüchen 1 bis 2, **dadurch gekennzeichnet, dass** der zumindest eine Kühlkanal (24) in der Gehäusewand (26) einen vertikalen Verlauf (44) und im oder auf einem Gehäusemantel (58) des Gehäuses (12) einen horizontalen Verlauf (46) nimmt.

4. Verfahren gemäß den Ansprüchen 1 bis 3, **dadurch gekennzeichnet, dass** der zumindest eine Kühlkanal (24) in der mindestens einen Gehäusewand (26) und im Gehäusemantel (58) mindestens eine Knickstelle (48) aufweist, an der der Kühlfluidstrom im Bereich zwischen 80° und 120°, bevorzugt 90°, umgelenkt ist.

5. Verfahren gemäß Anspruch 4, **dadurch gekennzeichnet, dass** an der mindestens einen Knickstelle (48) mindestens eine Abdichtung (50, 52) mittels eines Dichtkörpers (54), insbesondere einer Stahlkugel (56) ausgeführt ist.

6. Verfahren gemäß den Ansprüchen 1 bis 5, **dadurch gekennzeichnet, dass** die Übergabestellen (18, 20) in der Fläche des Gehäusemantels (58) liegen.

7. Verfahren gemäß den Ansprüchen 1 bis 6, **dadurch gekennzeichnet, dass** der zumindest eine Kühlkanal (24) oder dessen Kanalabschnitte (34, 36) durch einbautenfreie Bereiche des Gehäuses (12) verlaufen.

## Claims

1. Method for producing a housing (12) of an E-axle module (10) having at least one electric machine (11) and a transmission (13), wherein the electric machine (11) is cooled by means of a cooling circuit, wherein, in the housing (12), at least one cooling channel (24) extends in at least one housing wall (26) from a first transfer point (18) to at least one further transfer point (20), the cooling channel running along thermally critical bearing points (30, 32), and wherein the at least one cooling channel (24) comprises at least one channel section (34) and a further channel section (36) which are fluidically connected to one another at a deflection point (38), **characterized in that** the method makes provision that the channel sections (34, 36) are produced during the primary shaping of the housing (12) and are finished in terms of diameter and length by machining in mutually different machining directions (40, 42).

2. Method according to Claim 1, **characterized in that** the thermally critical points are a first bearing point (30) and at least one further bearing point (32) of the transmission (13).

3. Method according to Claims 1 to 2, **characterized in that** the at least one cooling channel (24) takes a vertical profile (44) in the housing wall (26) and a horizontal profile (46) in or on a housing shell (58) of the housing (12).

4. Method according to Claims 1 to 3, **characterized in that** the at least one cooling channel (24) has, in the at least one housing wall (26) and in the housing shell (58), at least one kink (48) at which the cooling fluid flow is deflected in the range between 80° and 120°, preferably 90°.

5. Method according to Claim 4, **characterized in that** at least one seal (50, 52) is formed at the at least one kink (48) by means of a sealing body (54), in particular a steel ball (56).

6. Method according to Claims 1 to 5, **characterized in that** the transfer points (18, 20) lie in the area of the housing shell (58).

7. Method according to Claims 1 to 6, **characterized in that** the at least one cooling channel (24) or the channel sections (34, 36) thereof run through regions of the housing (12) which are free of internals.

## Revendications

1. Procédé de fabrication d'un boîtier (12) d'un module d'essieu électrique (10) avec au moins une machine électrique (11) et une transmission (13), la machine électrique (11) étant refroidie au moyen d'un circuit de refroidissement, au moins un canal de refroidissement (24) s'étendant dans le boîtier (12) dans au moins une paroi de boîtier (26) d'un premier point de transfert (18) à au moins un autre point de transfert (20), lequel s'étend le long de points d'appui (30, 32) thermiquement critiques, et l'au moins un canal de refroidissement (24) comprenant au moins une section de canal (34) et une autre section de canal (36) qui sont reliées fluidiquement l'une à l'autre au niveau d'un point de déviation (38), **caractérisé en ce que** le procédé prévoit que les sections de canal (34, 36) sont produites lors du formage initial du boîtier (12) et sont finies en termes de diamètre et de longueur par usinage par enlèvement de copeaux dans des directions d'usinage (40, 42) différentes l'une de l'autre.

2. Procédé selon la revendication 1, **caractérisé en ce que** les points thermiquement critiques sont un premier point d'appui (30) et au moins un autre point d'appui (32) de la transmission (13).

3. Procédé selon les revendications 1 à 2, **caractérisé en ce que** l'au moins un canal de refroidissement (24) prend un tracé vertical (44) dans la paroi de boîtier (26) et un tracé horizontal (46) dans ou sur une enveloppe de boîtier (58) du boîtier (12).

4. Procédé selon les revendications 1 à 3, **caractérisé en ce que** l'au moins un canal de refroidissement (24) présente dans l'au moins une paroi de boîtier (26) et dans l'enveloppe de boîtier (58) au moins un point d'inflexion (48) au niveau duquel le flux de fluide de refroidissement est dévié dans une plage comprise entre 80° et 120°, de préférence 90°.

5. Procédé selon la revendication 4, **caractérisé en ce qu'**au moins un joint d'étanchéité (50, 52) est réalisé au niveau de l'au moins un point d'inflexion (48) au moyen d'un corps d'étanchéité (54), notamment d'une bille d'acier (56).

6. Procédé selon les revendications 1 à 5, **caractérisé en ce que** les points de transfert (18, 20) sont situés dans la surface de l'enveloppe de boîtier (58).

7. Procédé selon les revendications 1 à 6, **caractérisé en ce que** l'au moins un canal de refroidissement (24) ou ses sections de canal (34, 36) s'étendent à travers des zones du boîtier (12) exemptes d'éléments intégrés.
